# EUROPÄISCHE PATENTSCHRIFT

(11) **EP 1 736 277 B1**
(45) Veröffentlichungstag und Bekanntmachung des Hinweises auf die Patenterteilung: **02.07.2008**
(21) Anmeldenummer: 06010514.5
(22) Anmeldetag: 22.05.2006
(51) Int. Cl.: B23Q 11/10, B23Q 11/12, B23Q 1/00

(54) **Spindelvorrichtung mit Innenkühlung und geschlossenem Spindelkühlkanal durch eine Drehdurchführung**
Spindle device with through coolant and closed spindle cooling circuit running through a rotary coupling
Broche avec passage interne de réfrigérant et circuit fermé de réfrigération passant à travers un joint rotatif

(30) Priorität: 21.06.2005 DE 102005030277
(43) Veröffentlichungstag der Anmeldung: 27.12.2006
(73) Patentinhaber: Fischer AG, 3360 Herzogenbuchsee (CH)
(72) Erfinder: Scholl, Stephan, 3360 Herzogenbuchsee (CH)
(74) Vertreter: Hössle, Markus

(56) Entgegenhaltungen:
- EP-A- 1 143 159
- EP-B- 1 163 072
- DE-A1- 19 516 986
- US-B1- 6 398 468
- PATENT ABSTRACTS OF JAPAN Bd. 1995, Nr. 04, 31. Mai 1995 (1995-05-31) & JP 07 024687 A (MAKINO MILLING MACH CO LTD), 27. Januar 1995 (1995-01-27)
- PATENT ABSTRACTS OF JAPAN Bd. 2000, Nr. 13, 5. Februar 2001 (2001-02-05) & JP 2000 288870 A (MAKINO MILLING MACH CO LTD), 17. Oktober 2000 (2000-10-17)
- PATENT ABSTRACTS OF JAPAN Bd. 2000, Nr. 09, 13. Oktober 2000 (2000-10-13) & JP 2000 158288 A (KOYO MACH IND CO LTD), 13. Juni 2000 (2000-06-13)

## Beschreibung

Die Erfindung betrifft eine Spindelvorrichtung nach dem Oberbegriff von Anspruch 1.

Eine derartige Spindelvorrichtung ist aus der US-6,398,468-B bekannt.

Bei einer aus der JP 2000288870 A (Patent Abstracts of Japan) bekannten Spindelvorrichtung wird eine Zufuhr von Kühlmittel über die Zugstange zur Kühlung der Spindel genutzt. Das Kühlmittel wird seitlich aus der Spindel abgeführt. Dazu ist eine Zuführung von Druckluft an verschiedenen Stellen der Spindel notwendig, um die Lager frei von Kontaminationen zu halten und um ein Austreten von Kühlmittel zu unterbinden.

Eine derartige Kühlung hat den Nachteil, dass diese nicht mit einer in vielen Fällen erforderlichen Kühlung des Werkzeugs kombiniert ist. Der Kühlmittelfluss über die Zugstange wird vielmehr ausschließlich zur Kühlung der Spindel selbst genutzt. Würde man dagegen die Kühlmittelzufuhr über den zentralen Kanal der Zugstange auch zur Kühlung des Werkzeugs nutzen, so wäre der Betrieb der Spindel grundsätzlich nur bei Kühlmittelzufuhr zum Werkzeug möglich, was teilweise jedoch unerwünscht ist.

Des Weiteren ist die notwendige Druckluftzufuhr an verschiedenen Dichtungsstellen nachteilig und führt zu einem sehr komplizierten Aufbau der Spindel.

Aus der EP 1 163 072 B1 ist eine weitere Spindelvorrichtung bekannt, die insbesondere als HF-Frässpindel einsetzbar ist. Hierbei wird ein Kühlmittel seitlich in die Spindel eingeführt und über Kühlkanäle, die sich durch eine zentrale Zugstange und die Spindel erstrecken, zur Kühlung der Spindel genutzt und schließlich wieder seitlich aus der Spindel abgeführt.

Eine derartige Spindelausführung hat sich als anfällig gegenüber Vibrationen insbesondere bei hohen Drehzahlen erwiesen.

Ferner erfordert es die verwendete Spaltdichtung mit Luft als abdichtendes Druckmedium, dass die Druckmittelversorgung ständig aufrecht erhalten wird, denn sonst kann Restkühlmittel ins Innere der Spindel gelangen, was diese beschädigen kann.

Vor diesem Hintergrund liegt der Erfindung die Aufgabe zugrunde, eine verbesserte Spindelvorrichtung zu schaffen, die für hohe Spindeldrehzahlen geeignet ist. Dabei soll eine Kühlung der Spindel von innen unabhängig von einer möglichen Kühlmittelzufuhr zum Werkzeug ermöglicht sein. Ferner soll eine möglichst wirksame Kühlung der Spindel bei hoher Zuverlässigkeit im Dauerbetrieb gewährleistet sein.

Diese Aufgabe wird durch eine Spindelvorrichtung gemäß Anspruch 1 gelöst.

Ferner kann die Spindelvorrichtung in einfacher Weise als komplettes Modul an einer Werkzeugmaschine montiert werden.

Zusätzlich erlaubt diese Anordnung eine unabhängige Versorgung eines von der Spindelvorrichtung angetriebenen Werkzeugs mit Kühlmittel, sofern dies gewünscht ist.

Die erfindungsgemäße Spindel zeichnet sich durch eine sehr gute Kühlwirkung bis in den vorderen, werkzeugseitigen Bereich einschließlich der vordersten Lagerstelle aus. Die Spindeltemperatur kann durchgehend auf maximal etwa 30 °C gehalten werden. Dagegen ist im Stand der Technik ohne eine Kühlung der Spindel von innen her mit Spindeltemperaturen von etwa 50 bis 70 °C im Betrieb zu rechnen.

Weiterhin kann der Spindelstart erfindungsgemäß deutlich schneller als bei herkömmlichen Spindeln erfolgen. Schon nach etwa zwei Minuten stellen sich stationäre Verhältnisse an der Spindel ein, während hierzu im Stand der Technik ohne Spindelinnenkühlung in der Regel etwa 15 Minuten erforderlich sind. Die thermische Ausdehnung der Spindelwelle kann dadurch in minimalen Grenzen gehalten werden.

Da die Lager nicht in den Kühlmittelfluss einbezogen sind, kann ein beliebiges Kühlmittel verwendet werden.

Schließlich wird die Steifigkeit der Spindel im vorderen werkzeugseitigen Bereich nicht nachteilig beeinflusst, da hier keine Kühlmittelabfuhr aus der Spindel nach außen erfolgt.

Gemäß einer Weiterbildung der Erfindung ist der Spindelabschnitt mittels zweier Lager an einem Gehäuse der Drehdurchführung gelagert, das mit dem Gehäuse der Spindelvorrichtung lösbar verbunden ist, vorzugsweise damit verschraubt ist.

Auf diese Weise werden Vibrationen weiter reduziert und eine einfache Montage gewährleistet.

In bevorzugter Weiterbildung der Erfindung ist mindestens ein geschlossener Kühlkanal vorgesehen, der sich in Axialrichtung außermittig durch die Spindelwelle, die Zugstange und den Spindelabschnitt der Drehdurchführung erstreckt.

Diese Ausführung hat den Vorteil, dass auf diese Weise eine Kühlmittelzufuhr zu allen Lagerstellen der Spindel sowie zum Rotor des mit der Spindel kombinierten Antriebsmotors ermöglicht ist, während gleichzeitig zusätzlich eine Möglichkeit für eine Zufuhr von Kühlmittel über die Zugstange für eine unabhängige Kühlmittelzufuhr an das Werkzeug besteht.

Gemäß einer weiteren Ausführung der Erfindung weist jeder Kühlkanal einen mit der Zuflussöffnung gekoppelten Vorlaufkanal und einen mit der Abflussöffnung gekoppelten Rücklaufkanal auf, wobei Vorlaufkanal und Rücklaufkanal im Bereich eines ersten Endes der Spindel miteinander gekoppelt sind, vorzugsweise über ein Umlenkelement miteinander verbunden sind.

Auf diese Weise kann eine besonders gleichmäßige Kühlung der Spindel über deren gesamte Länge gewährleistet werden. Auch lässt sich ein geschlossener Kühlkanal so auf einfache Weise realisieren.

Eine Abdichtung über eine Spaltdichtung hat den Vorteil, dass diese verschleißfrei ist, so dass Nachteile bei hohen Spindeldrehzahlen vermieden werden.

Durch die Berührungsdichtung können Leckagen, die über die Spaltdichtung noch erfolgen, abgefangen werden.

Die Berührungsdichtung ist über einen Druckkanal derart mit einem Druckmedium, vorzugsweise mit Luft, beaufschlagbar, dass die Berührungsdichtung bei angetriebener Spindel berührungsfrei ist und durch das Druckmedium abgedichtet ist, während bei Stillstand der Spindel und abgeschaltetem Druckmedium eine Abdichtung über die Berührungsdichtung erfolgt.

Diese Ausgestaltung hat den Vorteil, dass während des Betriebs der Spindel eine vollständig berührungslose Abdichtung gewährleistet ist, während bei Stillstand der Spindel und abgeschaltetem Druckmedium eine Abdichtung über die Berührungsdichtung erfolgt.

Somit kann auch bei sehr hohen Spindeldrehzahlen eine vollständige und verschleißfreie Abdichtung gewährleistet werden, während bei Stillstand der Spindel die Abdichtung über die Berührungsdichtung gewährleistet ist.

Gemäß einer weiteren Ausgestaltung der Erfindung ist der Druckkanal gegenüber einem Lager durch eine zweite Spaltdichtung abgedichtet.

Auf diese Weise wird sichergestellt, dass das Druckmedium aus dem Druckkanal, das zur berührungsfreien Abdichtung der Berührungsdichtung während des Betriebes genutzt wird, nicht in ein benachbartes Lager austritt und so dessen Schmierung beeinträchtigt.

Der Druckkanal ist gemäß einer weiteren Ausführung der Erfindung mit einem Leckagerücklauf gekoppelt, über den aus der ersten Spaltdichtung austretende Leckagen des Kühlmittels abführbar sind.

Auf diese Weise können Leckagen des Kühlmittels wirkungsvoll abgeführt werden.

In zusätzlicher Weiterbildung der Erfindung ist die zweite Spaltdichtung lagerseitig mit einem Entlastungskanal verbunden, über den über die zweite Spaltdichtung austretendes Druckmedium abführbar ist.

Auf diese Weise wird ein an die zweite Spaltdichtung angrenzendes Lager vollständig gegen einen Zutritt des Druckmediums geschützt, da über die zweite Spaltdichtung gedrosseltes Druckmedium, das gegebenenfalls noch zu einer Beeinträchtigung des Lagers führen könnte, noch vor dem Lager über den Entlastungskanal abgeführt wird.

Gemäß einer weiteren Ausgestaltung der Erfindung weist die Drehdurchführung ein Gehäuse auf, das mit dem Gehäuse der Spindel verbunden ist und in dem eine zentrale Aufnahme zur Führung der Zugstange drehbar gelagert ist.

Auf diese Weise kann die Drehdurchführung als ein eigenständiges Modul aufgebaut sein, das mit dem Spindelgehäuse kombinierbar ist, wobei die Zugstange auf der Seite der Drehdurchführung in der zentralen Aufnahme geführt ist.

Gemäß einer Weiterbildung dieser Ausführung sind die Zuflussöffnung und die Abflussöffnung über Kanalabschnitte in der zentralen Aufnahme der Drehdurchführung mit Kanalabschnitten in der Zugstange gekoppelt, die mit weiteren Kanalabschnitten in der Spindelwelle gekoppelt sind.

Auf diese Weise kann Kühlmittel über die Drehdurchführung gezielt über verschiedene Kühlkanäle zur Kühlung sämtlicher Lagerstellen und zur Kühlung des Rotors zugeführt werden, um eine besonders wirkungsvolle Kühlung der Spindel von innen her zu gewährleisten.

In vorteilhafter Weiterbildung der Erfindung erstreckt sich der zumindest eine Kühlkanal zumindest über den Bereich aller Lager der Spindeln und über den Bereich eines Rotors eines Antriebsmotors der Spindel.

Auf diese Weise ist eine wirkungsvolle Kühlung der Spindel an den wesentlichen Teilen gewährleistet, die während des Betriebs der Spindel Wärme freisetzen.

Gemäß einer weiteren Ausgestaltung der Erfindung sind die Rücklaufkanäle und Vorlaufkanäle im Bereich des ersten Endes der Spindelwelle über ein Umlenkelement miteinander verbunden.

Es versteht sich, dass die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der Erfindung zu verlassen.

Weitere Merkmale und Vorteile der Erfindung ergeben sich aus der nachfolgenden Beschreibung eines bevorzugten Ausführungsbeispiels unter Bezugnahme auf die Zeichnung.
- Figur 1: zeigt einen Längsschnitt durch eine erfindungsgemäße Spindelvorrichtung.
- Figur 2: zeigt einen vergrößerten Längsschnitt durch die Drehdurchführung der Spindelvorrichtung gemäß Figur 1 in einer Schnittebene, in der die Führung der Vorlaufkanäle erkennbar ist.
- Figur 3: zeigt einen Schnitt durch die Drehdurchführung ähnlich gemäß Figur 2, wobei jedoch in der Schnittebene die Führung der Rücklaufkanäle erkennbar ist.
- Figur 4: zeigt einen Teilschnitt durch die Drehdurchführung gemäß der Figuren 2 und 3, aus dem im Bereich einer Berührungsdichtung der Drehdurchführung ein Leckagerücklauf zur Abführung von Leckageverlusten erkennbar ist.
- Figur 5: zeigt einen Teilschnitt durch die Drehdurchführung gemäß Figur 4, aus dem ein Entlastungskanal zur Abführung von Druckmedium von einem benachbarten Lager erkennbar ist.
- Figur 6: zeigt einen Teilschnitt durch die Spindelvorrichtung gemäß Figur 1, aus dem die Führung von Kanalabschnitten im Bereich der Spindelwelle, derZugstange und des Spindelabschnittes der Drehdurchführung erkennbar ist.

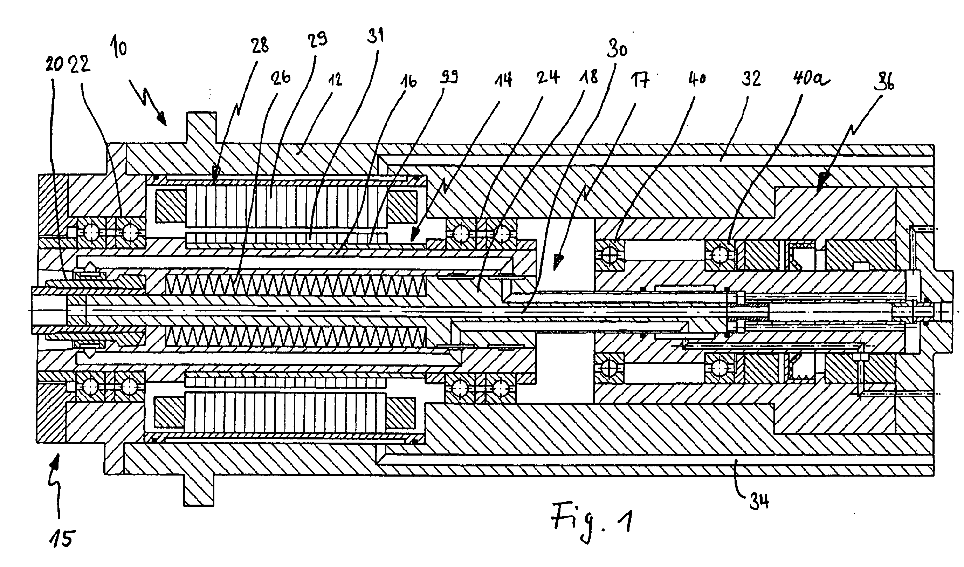

Figur 1 zeigt einen Längsschnitt durch eine insgesamt mit der Ziffer 10 bezeichnete Spindelvorrichtung gemäß der Erfindung.

Die erfindungsgemäße Spindelvorrichtung 10 ist als Hochfrequenzspindel ausgebildet und ist zum Einsatz für höchste Drehzahlen bei zahlreichen Werkzeugmaschinen, insbesondere für Fräs- bzw. Schleifmaschinen geeignet.

Die Spindelvorrichtung 10 weist ein Gehäuse 12 auf, in dem eine insgesamt mit der Ziffer 14 bezeichnete Spindel drehbar gelagert ist. Die Spindel 14 weist ein erstes werkzeugseitiges Ende 15 und ein zweites Ende 17 auf. Eine Spindelwelle 16 ist am ersten Ende 15 mittels einer Lagerung 22, sowie am zweiten Ende 17 mittels einer zweiten Lagerung 24 drehbar gelagert. Am ersten Ende 15 der Spindel bzw. Spindelwelle 16 ist eine Werkzeugspanneinrichtung 20 grundsätzlich bekannter Bauart vorgesehen, die über eine zentral angeordnete Zugstange 18 betätigbar ist. Die Zugstange 18 ist durch ein Federpaket 26 in eine Spannstellung der Werkzeugspanneinrichtung 20 vorgespannt. Im Bereich des zweiten Endes 17 ist eine insgesamt mit der Ziffer 36 bezeichnete Drehdurchführung in das Gehäuse 12 der Spindel 14 eingebaut. Die Drehdurchführung 36 umfasst eine eigenständige Lagerung 40 für eine einen Spindelabschnitt 39 mit einer zentralen Aufnahme 38, in der die Zugstange 18 an ihrem der Werkzeugspanneinrichtung 20 abgewandten Ende geführt ist. Die Drehdurchführung 36 weist ferner an ihrem der Werkzeugspanneinrichtung 20 abgewandten Ende sämtliche Anschlüsse für die Zu- und Abfuhr von Kühlmittel und gegebenenfalls für weitere Versorgungsleitungen auf.

Die Spindelvorrichtung 10 besitzt eine externe Kühlung für eine Außenkühlung des Gehäuses 12, wobei in Figur 1 Kanäle 32 und 34 für die Zufuhr- bzw. Abfuhr von Kühlmittel erkennbar sind.

Erfindungsgemäß ist die Spindelvorrichtung 10 zusätzlich mit einer Innenkühlung für die Spindel 14 versehen, die eine Mehrzahl von geschlossenen Kühlkanälen aufweist, die von Kühlmittel durchströmt werden, das über Anschlüsse an der Drehdurchführung 36 in Axialrichtung zu- bzw. abgeführt wird.

Des Weiteren besitzt die erfindungsgemäße Spindelvorrichtung 10 zusätzlich eine Möglichkeit für eine Kühlmittelzuführung über die Drehdurchführung 36 in einen zentralen Axialkanal 30 der Zugstange 18, um so eine Kühlmittelzufuhr zum Werkzeug zu ermöglichen, sofern dies gewünscht ist.

Es versteht sich, dass die erfindungsgemäße Spindelvorrichtung 10 jedoch auch ohne eine solche Option ausgestaltet sein kann, sofern für den jeweiligen Anwendungsfall keine Kühlung des Werkzeugs über die Spindel 14 gewünscht ist.

Der Motor 28 zum Antrieb der Spindelwelle 16 weist einen in das Gehäuse 12 integrierten Stator 29 auf, der über die Kühlkanäle 32, 34 von außen gekühlt wird. Der zugehörige Rotor 31 befindet sich unmittelbar auf der Spindelwelle 16 und wird durch die Innenkühlung der Spindel 14 von innen her gekühlt.

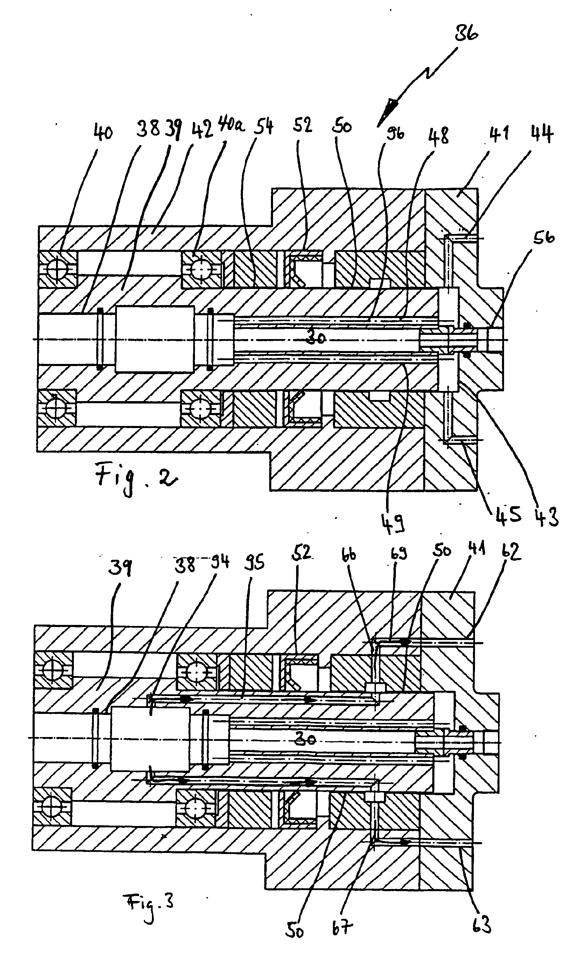

Die Ausgestaltung der Drehdurchführung 36 und des Kühlsystems der Spindelvorrichtung 10 wird nunmehr anhand der Figuren 2 bis 6 näher erläutert.

Aus der vergrößerten Darstellung der Figuren 2 und 3 ist ersichtlich, dass die Drehdurchführung 36 als ein Teil mit einem eigenständigen Gehäuse 42 ausgebildet ist, das mit dem Gehäuse 12 der Spindelvorrichtung 10 lösbar verbunden ist, beispielsweise verschraubt ist.

Im Gehäuse 42 der Drehdurchführung 36 ist eine Lagerung mit einem Lagerpaar 40, 40a eingebaut, mit Hilfe dessen der Spindelabschnitt 39 mit der zentralen Aufnahme 38 für die Zugstange 18 drehbar gelagert ist. An ihrem der Werkzeugspanneinrichtung 20 abgewandten Ende ist die Drehdurchführung 36 durch einen Flansch 41 nach außen abgeschlossen, durch den sämtliche Verbindungsleitungen für die Spindel nach außen geführt sind und gegebenenfalls mit geeigneten Schraubanschlüssen versehen sind.

In Figur 2 sind zwei Zuflussöffnungen 44, 45 erkennbar, die mit Kühlmittelleitungen gekoppelt sind. Die Zuflussöffnungen 44, 45 sind jeweils mit einem Vorlaufkanal 48 bzw. 49 verbunden, über den Kühlmittel zur Innenkühlung der Spindel 14 zugeführt wird, wobei dies am ersten Ende 15 der Spindel 14 jeweils umgelenkt wird und zurück über den Flansch 41 der Drehdurchführung 36 in angeschlossene Kühlmittelleitungen abgeführt wird. Die beiden Zuflussöffnungen 44, 45 münden in einen gemeinsamen Hohlraum 43. Es könnte somit auch auf eine der beiden Zuflussöffnungen 44, 45 verzichtet werden und die Kühlmittelversorgung lediglich über eine Zuflussöffnung erfolgen (und in entsprechender Weise die Kühlmittelabfuhr nur über eine Abflussöffnung). Es versteht sich, dass die Zu- und Abflussöffnungen auch vertauscht werden können.

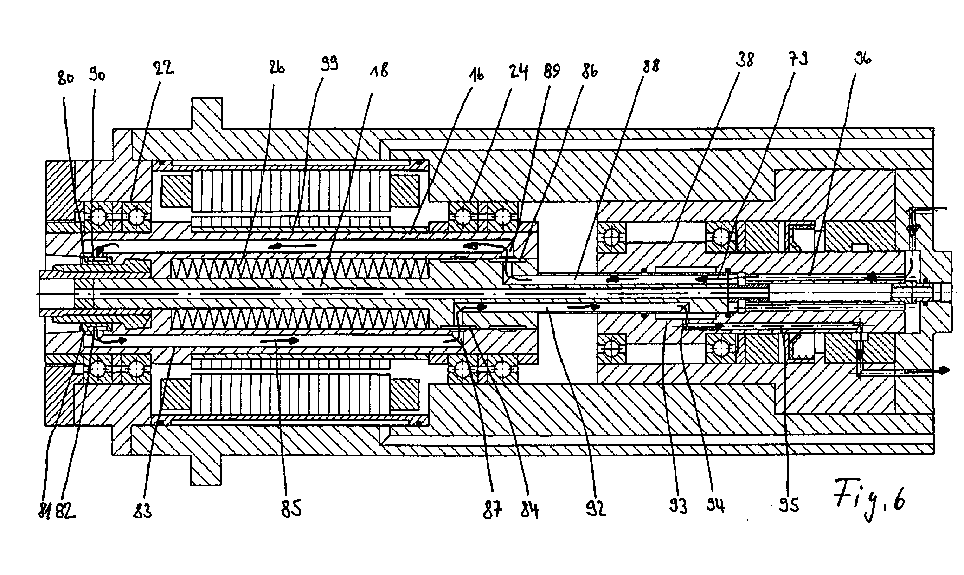

Die Vorlaufkanäle 48, 49 sind nun über eine Reihe von Kanalabschnitten, die sich durch den Spindelabschnitt 39, die Zugstange 18 und die Spindelwelle 16 erstrecken, miteinander gekoppelt. Am ersten Ende 15 der Spindelwelle 16 münden die Vorlaufkanäle in ein Umlenkelement 80 (Figur 6) und sind von diesem aus über Rücklaufkanäle, die sich wiederum über Kanalabschnitte in der Spindelwelle 16, in der Zugstange 18 und dem Spindelabschnitt 39 der Drehdurchführung 36 erstrecken, zurückgeführt. Es sind mehrere Vorlaufkanäle in gleichmäßigen Winkelabständen voneinander vorgesehen, die jeweils mit einem Rücklaufkanal gekoppelt sind.

Aus der Darstellung gemäß Figur 2 ist erkennbar, dass sich die Vorlaufkanäle 48, 49 von dem gemeinsamen Hohlraum 43 aus zunächst durch einen Kanalabschnitt 96 des Spindelabschnittes 39 erstrecken, von dessen Ende aus ein Übertritt in einen Kanalabschnitt 88 der Zugstange 18 erfolgt (vgl. Figur 6).

Von dem gemeinsamen Hohlraum 43 im Flansch 41 aus gelangt das Kühlmittel axial oder radial am Ende des Spindelabschnittes 39 in einen Kanalabschnitt 96. Der Hohlraum 43 und der sich drehende Spindelabschnitt 39 sind nun gegenüber dem Gehäuse 42 der Drehdurchführung 36 zunächst durch eine erste Spaltdichtung 50 abgedichtet. Da diese Spaltdichtung 50 berührungslos arbeitet, ist hierbei mit Leckageverlusten zu rechnen. Daher ist der Spaltdichtung 50 eine Berührungsdichtung 52 in Form einer Lippendichtung nachgeordnet.

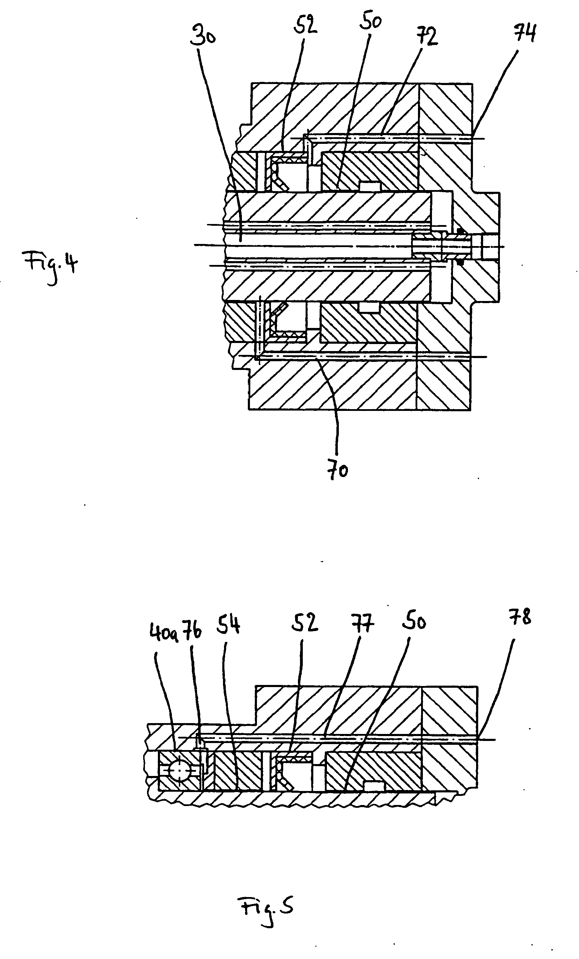

Die Berührungsdichtung 52 ist gemäß Figur 4 über einen Druckkanal 70 derart mit Druckluft beaufschlagbar, dass die Dichtlippe während des Betriebs der Spindel 14 unter dem Einfluss der zugeführten Druckluft von der Dichtfläche abgehoben ist. So ist die Berührungsdichtung 52 während des Betriebs der Spindel 14 berührungslos und somit selbst bei hohen Drehzahlen keinem Verschleiß unterworfen. Über die erste Spaltdichtung 50 austretende Leckageverluste werden so durch die entgegenströmende Druckluft in einen Leckagerücklauf 72 abgeführt, der mit einer Leckageabflussöffnung 74 verbunden ist.

Damit die über den Druckkanal 70 zugeführte Druckluft nicht zu einer Beeinträchtigung des benachbarten Lagers 40 führt, ist der Druckkanal 70 über eine zweite Spaltdichtung 54 gegenüber dem Lager 40 abgedichtet. Die Druckluft wird über die zweite Spaltdichtung 54 gedrosselt, jedoch könnte diese ggf. noch in das Lager 40 austreten und somit dessen Schmierung in unerwünschter Weise beeinträchtigen.

Um dies zu verhindern, wird die über die zweite Spaltdichtung 54 austretende Luft über eine Bohrung 76 in einen Entlastungskanal 77 abgeführt und gelangt von dort aus an einen Ausgang 78 bzw. einen daran angeschlossenen Schlauch (vgl. Figur 5). So wird jede Beeinträchtigung der Schmierung des der Berührungsdichtung 52 benachbarten Lagers 40 durch die Beaufschlagung mit einem Druckmedium bzw. Druckluft verhindert.

In Figur 3 ist nun die Führung des Rücklaufs im Bereich der Drehdurchführung 36 erkennbar. Die in Figur 3 dargestellten, insgesamt mit den Ziffern 66 und 67 bezeichneten Rücklaufkanäle münden über Abflussöffnungen 62, 63 im Flansch 41 in angeschlossene Kühlleitungen (nicht dargestellt), die zu einem Kühlmittelreservoir zurückführen. Die Rücklaufkanäle 66, 67 weisen im Bereich der zentralen Aufnahme 38 Kanalabschnitte 95 auf, in die das rückgeführte Kühlmittel über Bohrungen 94 aus der Zugstange 18 eingeführt wird. Das Kühlmittel fließt durch die Kanalabschnitte 95, wie durch die Pfeile 69 angedeutet, in Bohrungen im Mantel der zentralen Aufnahme 38 in Axialrichtung. Es wird schließlich durch radiale Durchtrittskanäle durch die erste Spaltdichtung 50 hindurch nach außen abgeführt und gelangt dann in die Abflussöffnungen 62 bzw. 63 im Flansch 41.

Über einen Zuführschlauch, der über eine Verschraubung (nicht dargestellt) mit einer zentralen Zuflussöffnung 56 am Flansch 41 verbunden ist, kann zusätzlich Kühlmittel in den zentralen Axialkanal 30 der Zugstange 18 zugeführt werden. Der zentrale Axialkanal 30 mündet werkzeugseitig und erlaubt so eine Zufuhr von Kühlmittel zum Werkzeug bzw. Werkstück.

Die Kühlmittelführung durch die Vorlauf- bzw. Rücklaufkanäle von der zentralen Aufnahme 38 über die Zugstange 18 in die Spindelwelle 16 und zurück über die Spindelwelle 16 und die Zugstange 18 durch die zentrale Aufnahme 38 ist aus Figur 6 ersichtlich.

Figur 6 zeigt, wie das Kühlmittel in Zulaufrichtung 79 von dem Ende des Kanalabschnittes 96 in Kanalabschnitte 88 der Zugstange 18 geführt wird, die in Taschen 86 münden, die zwischen der Zugstange 18 und der Spindelwelle 16 gebildet sind. Von diesen Taschen 86 aus gelangt das Kühlmittel über radiale Vertiefungen 89 in entsprechende Axialkanalabschnitte der Spindelwelle 16, über die das Kühlmittel bis in den Bereich der Lagerung 22 geführt ist. Hier erfolgt eine Umlenkung des Kühlmittels über ein Umlenkelement 80 in zugeordnete Rücklaufkanäle. Das Umlenkelement 80 ist als eine zylindrische Hülse ausgebildet und weist in seiner Mantelfläche Vertiefungen auf, in die jeweils ein Paar von Vorlaufkanälen und Rücklaufkanälen ausmündet. Das Umlenkelement 80 ist so in eine Bohrung 81 der Spindelwelle 16 eingesetzt, dass mit den Vertiefungen und der Innenwand der Bohrung 81 jeweils ein abgeschlossener Überströmraum 82 gebildet wird, durch den die Verbindung zwischen den Vorlauf- und Rücklaufkanälen hergestellt wird.

Aus Figur 6 ist erkennbar, wie das Kühlmittel von dem Umlenkelement 80 aus über Kanalabschnitte 83 in der Spindelwelle 16 in Richtung der Pfeile 85 zurückgeführt wird und schließlich über eine Vertiefung 87 der Spindelwelle 16 in eine vordere Tasche 84 gelangt, die zwischen der Zugstange 18 und der Spindelwelle 16 gebildet ist. Während über diese vorderen Taschen 84 der Rückfluss über die Zugstange 18 erfolgt, erfolgt der Zufluss über die benachbarten hinteren Taschen 86.

Das Kühlmittel wird von den vorderen Taschen 84 aus über axiale Kanalabschnitte 92 in der Zugstange 18 zurückgeführt und gelangt schließlich über weitere Taschen 93 und Radialbohrungen 94 in den Spindelabschnitt 39 der Drehdurchführung 36 und wird dann über die Kanalabschnitte 95 abgeführt.

Aus Figur 6 ist ferner die Zuführung des Kühlmittels aus den Kanalabschnitten 96 des Spindelabschnittes 39 über Bohrungen in die Kanalabschnitte 88 der Zugstange 18 und von dort aus über radiale Kanalabschnitte bis in die Taschen 86 erkennbar.

Die Kanalabschnitte der Vorlauf- bzw. Rücklaufkanäle können grundsätzlich als Bohrungen ausgeführt sein. Alternativ ist auch eine Ausführung mit einem eingeschrumpften Rohr denkbar, in das die Kanalabschnitte eingefräst sind. Ferner kann auch der Träger des Rotors 99 zur Ausbildung der Kanalabschnitte genutzt werden.

Insgesamt ermöglicht das Kühlsystem der Spindelvorrichtung 10 eine gezielte Innenkühlung der Spindel 14 über deren gesamten Bereich, wobei sämtliche Lager 22, 24, 40 und der Bereich des Rotors 31 in ausreichender Weise gekühlt werden, so dass eine Betriebstemperatur von ca. 30° im Betrieb eingehalten werden kann.

Zusätzlich ist eine Zufuhr von Kühlmittel über den zentralen Axialkanal 30 der Zugstange 18 möglich, um ein eingesetztes Werkzeug bzw. ein Werkstück kühlen zu können.

Schließlich ist eine externe Kühlung vorgesehen, durch die Motor bzw. Spindel von außen gekühlt werden können.

## Patentansprüche

1. Spindelvorrichtung mit einem Gehäuse (12), in dem eine rotierend antreibbare Spindel (14) gelagert ist, die eine in einer Spindelwelle (16) axial verschiebbare Zugstange (18) zur Betätigung einer Werkzeugspanneinrichtung (20) aufweist, und wobei die Spindel (14) von mindestens einem geschlossenen Kühlkanal (48, 49, 66, 67, 86, 88, 92) durchsetzt ist, der von Kühlmittel durchströmbar ist, wobei eine Drehdurchführung (36) vorgesehen ist, die einen drehbar gelagerten Spindelabschnitt (39) aufweist, über den der mindestens eine Kühlkanal (48, 49, 66, 67) mit einer Zuflussöffnung (44, 45) und einer Abflussöffnung (62, 63) für das Kühlmedium gekoppelt ist, **dadurch gekennzeichnet, dass** der zumindest eine Kühlkanal (48, 49, 66, 67) gegen das Gehäuse (42) der Drehdurchführung (36) über eine erste Spaltdichtung (50) und eine Berührungsdichtung (52) abgedichtet ist, die derart über einen Druckkanal (70) mit einem Druckmedium beaufschlagbar ist, dass die Berührungsdichtung (52) bei angetriebener Spindel (14) berührungsfrei ist und durch das Druckmedium abgedichtet ist, während bei Stillstand der Spindel (14) und abgeschaltetem Druckmedium eine Abdichtung über die Berührungsdichtung (52) erfolgt.

2. Spindelvorrichtung nach Anspruch 1, **dadurch gekennzeichnet, dass** der Spindelabschnitt (39) mittels zweier Lager (40, 40a) an einem Gehäuse (42) der Drehdurchführung (36) gelagert ist, das mit dem Gehäuse (12) der Spindelvorrichtung (10) lösbar verbunden ist, vorzugsweise damit verschraubt ist.

3. Spindelvorrichtung nach Anspruch 1 oder 2, **dadurch gekennzeichnet, dass** mindestens ein geschlossener Kühlkanal vorgesehen ist, der sich in Axialrichtung außermittig durch die Spindelwelle (16), die Zugstange (18) und den Spindelabschnitt (39) der Drehdurchführung (36) erstreckt.

4. Spindelvorrichtung nach Anspruch 1, 2 oder 3, **dadurch gekennzeichnet, dass** jeder Kühlkanal einen mit der Zuflussöffnung (44, 45) gekoppelten Vorlaufkanal (48, 49) und einen mit der Abflussöffnung (62, 63) gekoppelten Rücklaufkanal (66, 67) aufweist, wobei Vorlaufkanal (48, 49) und Rücklaufkanal (66, 67) jeweils im Bereich eines ersten Endes der Spindel (14) miteinander gekoppelt sind, vorzugsweise über ein Umlenkelement (80) miteinander verbunden sind.

5. Spindelvorrichtung nach Anspruch 1, **dadurch gekennzeichnet, dass** der Druckkanal (70) gegenüber einem Lager (40) durch eine zweite Spaltdichtung (54) abgedichtet ist.

6. Spindelvorrichtung nach Anspruch 1 oder 5, **dadurch gekennzeichnet, dass** der Druckkanal (70) mit einem Leckagerücklauf (72) gekoppelt ist, über den aus der ersten Spaltdichtung (50) austretende Leckagen des Kühlmittels abführbar sind.

7. Spindelvorrichtung nach Anspruch 5 oder 6, **dadurch gekennzeichnet, dass** die zweite Spaltdichtung (54) lagerseitig mit einem Entlastungskanal (77) verbunden ist, über den über die zweite Spaltdichtung (54) austretendes Druckmedium abführbar ist.

8. Spindelvorrichtung nach einem der vorhergehenden Ansprüche, **dadurch gekennzeichnet, dass** im Spindelabschnitt (39) der Drehdurchführung (36) eine zentrale Aufnahme (38) zur Führung der Zugstange (18) vorgesehen ist.

9. Spindelvorrichtung nach Anspruch 8, **dadurch gekennzeichnet, dass** die Zuflussöffnung (44, 45) und die Abflussöffnung (62, 63) über Kanalabschnitte (95, 96) im Spindelabschnitt (38) der Drehdurchführung (36) mit Kanalabschnitten (88, 92) in der Zugstange (18) gekoppelt sind, die mit weiteren Kanalabschnitten (83) in der Spindelwelle (16) gekoppelt sind.

10. Spindelvorrichtung nach einem der vorhergehenden Ansprüche, **dadurch gekennzeichnet, dass** sich der zumindest eine Kühlkanal zumindest über den Bereich aller Lager (22, 24, 40) der Spindel (14) und über den Bereich eines Rotors (31) eines Antriebsmotors (28) der Spindel (14) erstrecken.

11. Spindelvorrichtung nach einem der vorhergehenden Ansprüche, **dadurch gekennzeichnet, dass** die Rücklaufkanäle (66, 67) und die Vorlaufkanäle (48, 49) im Bereich des ersten Endes (15) der Spindelwelle (16) über ein in eine Bohrung (81) der Spindelwelle (16) eingesetztes Umlenkelement (80) miteinander verbunden sind, das an seiner Außenoberfläche Vertiefungen (90) aufweist, die zusammen mit der Innenoberfläche der Bohrung (81) der Spindelwelle (16) jeweils einen abgeschlossenen Überströmraum (82) bilden, in den jeweils ein Vorlaufkanal und ein zugehöriger Rücklaufkanal (83) ausmünden.

## Claims

1. Spindle device, comprising a housing (12) in which a rotationally drivable spindle (14) is mounted, the spindle having a drawbar (18) which is axially displaceable in a spindle shaft (16), for actuating a tool-clamping device (20), wherein at least one closed cooling passage (48, 49, 66, 67, 86, 88, 92) passes through the spindle (14), through which cooling passage (48, 49, 66, 67, 86, 88, 92) coolant can flow, a rotary transmission leadthrough (36) being provided which has a rotatably mounted spindle section (39), via which the at least one cooling passage (48, 49, 66, 67) is coupled to an inflow opening (44, 45) and an outflow opening (62, 63) for the cooling medium, **characterized in that** the at least one cooling passage (48, 49, 66, 67) is sealed off relative to the housing (42) of the rotary transmission leadthrough (36) by means of a first gap seal (50) and a contact seal (52), to which a pressure medium can be applied via a pressure passage (70) in such a way that, when spindle (14) is driven, the contact seal (52) is contact-free and is sealed off by the pressure medium, whereas sealing is effected by means of the contact seal (52) when the spindle (14) is stopped and the pressure medium is shut off.

2. Spindle device according to claim 1, **characterized in that** the spindle section (39) is mounted on a housing (42) of the rotary transmission leadthrough (36) by means of two bearings (40, 40a), the housing (42) of the rotary transmission leadthrough (36) being releasably connected, preferably screwed, to the housing (12) of the spindle device (10).

3. Spindle device according to claim 1 or 2, **characterized in that** at least one closed cooling passage is provided which extends eccentrically in the axial direction through the spindle shaft (16), the drawbar (18) and the spindle section (39) of the rotary transmission leadthrough (36).

4. Spindle device according to claim 1, 2 or 3, **characterized in that** each cooling passage has a feed passage (48, 49) coupled to the inflow opening (44, 45) and a return passage (66, 67) coupled to the outflow opening (62, 63), the feed passage (48, 49) and the return passage (66, 67) respectively being coupled to one another in the region of a first end of the spindle (14), preferably being connected to one another via a deflection element (80).

5. Spindle device according to claim 1, **characterized in that** the pressure passage (70) is sealed off relative to a bearing (40) by a second gap seal (54).

6. Spindle device according to claim 1 or 5, **characterized in that** the pressure passage (70) is coupled to a leakage return (72) via which leakages of the coolant escaping from the first gap seal (50) can be drawn off.

7. Spindle device according to claim 5 or 6, **characterized in that** the second gap seal (54) is connected on the bearing side to a relief passage (77), via which pressure medium escaping via the second gap seal (54) can be drawn off.

8. Spindle device according to any one of the preceding claims, **characterized in that** a central receptacle (38) for guiding the drawbar (18) is provided in the spindle section (39) of the rotary transmission leadthrough (36).

9. Spindle device according to claim 8, **characterized in that** the inflow opening (44, 45) and the outflow opening (62, 63), via passage sections (95, 96) in the spindle section (38) of the rotary transmission leadthrough (36), are coupled to passage sections (88, 92) in the drawbar (18) which are coupled to further passage sections (83) in the spindle shaft (16).

10. Spindle device according to any one of the preceding claims, **characterized in that** the at least one cooling passage extends at least over the region of all the bearings (22, 24, 40) of the spindle (14) and over the region of a rotor (31) of a drive motor (28) of the spindle (14).

11. Spindle device according to any one of the preceding claims, **characterized in that** the return passages (66, 67) and the feed passages (48, 49) are connected to one another in the region of the first end (15) of the spindle shaft (16) via a deflection element (80) which is inserted into a bore (81) of the spindle shaft (16) and which has recesses (90) at its outer surface which form together with the inner surface of the bore (81) of the spindle shaft (16) a respective closed-off overflow space (82), into which a respective feed passage and an associated respective return passage (83) open out.

## Revendications

1. Dispositif à broche, comprenant un boîtier (12) dans lequel est montée une broche (14) susceptible d'être entraînée en rotation, qui comporte une tige de traction (18), déplaçable axialement dans un arbre de broche (16), pour actionner un dispositif de serrage d'outil (20), et ladite broche (14) est traversée par au moins un canal de refroidissement fermé (48, 49, 66, 67, 86, 88, 92) susceptible d'être traversé par un agent de refroidissement, et dans lequel est prévu un raccord traversant rotatif (36), qui comprend un tronçon de broche (39) monté en rotation et au moyen duquel ledit au moins un canal de refroidissement (48, 49, 66, 67) est couplé à une ouverture d'amenée (44, 45) et à une ouverture de sortie (62, 63) pour l'agent de refroidissement, **caractérisé en ce que** ledit au moins un canal de refroidissement (48, 49, 66, 67) est étanché par rapport au boîtier (42) du raccord traversant rotatif (36) via un premier joint de fente (50) et un joint de contact (52), lequel peut être alimenté, via un canal à pression (70), avec un fluide sous pression de telle manière que le joint de contact (52) est sans contact lorsque la broche (14) est entraînée et étanchée par le fluide sous pression, alors qu'à l'arrêt de la broche (14) et en absence de fluide sous pression, un étanchement a lieu via le joint de contact (52).

2. Dispositif à broche selon la revendication 1, **caractérisé en ce que** le tronçon de broche (39) est monté au moyen de deux paliers (40, 40a) dans un boîtier (42) du raccord traversant rotatif (36), ledit boîtier étant relié de façon détachable au boîtier (12) du dispositif à broche (10), de préférence vissé à celui-ci.

3. Dispositif à broche selon la revendication 1 ou 2, **caractérisé en ce qu'**il est prévu au moins un canal de refroidissement fermé, qui s'étend en direction axiale et de façon décentrée à travers l'arbre de broche (16), la tige de traction (18), et le tronçon de broche (39) du raccord traversant rotatif (36).

4. Dispositif à broche selon la revendication 1, 2 ou 3, **caractérisé en ce que** chaque canal de refroidissement comprend un canal d'approche (48, 49) couplé à l'ouverture d'amenée (44, 45), et un canal de retour (66, 67) couplé à l'ouverture de sortie (62, 63), le canal de d'approche (48, 49) et le canal de retour (66, 67) étant couplés respectivement l'un à l'autre dans la zone d'une première extrémité de la broche (14), et étant de préférence reliés l'un à l'autre via un élément de déflexion (80).

5. Dispositif à broche selon la revendication 1, **caractérisé en ce que** le canal à pression (70) est étanché par rapport à un palier (40) par un second joint de fente (54).

6. Dispositif à broche selon la revendication 1 ou 5, **caractérisé en ce que** le canal à pression (70) est couplé à un retour de fuite (72) via lequel les fuites d'agent de refroidissement qui sortent du premier joint de fente (50) peuvent être évacuées.

7. Dispositif à broche selon la revendication 5 ou 6, **caractérisé en ce que** le second joint de fente (54) est relié côté palier à un canal de décharge (77), au moyen duquel le fluide sous pression qui sort via le second joint de fente (54) peut être évacué.

8. Dispositif à broche selon l'une des revendications précédentes, **caractérisé en ce qu'**il est prévu dans le tronçon de broche (39) du raccord traversant rotatif (36) un logement central (38) pour guider la tige de traction (18).

9. Dispositif à broche selon la revendication 8, **caractérisé en ce que** l'ouverture d'amenée (44, 45) et l'ouverture de sortie (62, 63) sont couplées, via des tronçons de canaux (95, 96) dans le tronçon de broche (38) du raccord traversant rotatif (36), à des tronçons de canaux (88, 92) dans la tige de traction (18), qui sont couplés à d'autres tronçons de canaux (83) dans l'arbre de broche (16).

10. Dispositif à broche selon l'une des revendications précédentes, **caractérisé en ce que** ledit au moins un canal de refroidissement s'étend au moins sur la zone de tous les paliers (22, 24, 40) de la broche (14) et sur la zone d'un rotor (31) d'un moteur d'entraînement (28) de la broche (14).

11. Dispositif à broche selon l'une des revendications précédentes, **caractérisé en ce que** les canaux de retour (66, 67) et les canaux d'approche (48, 49) sont reliés les uns aux autres dans la zone de la première extrémité (15) de l'arbre de broche (16), via un élément de déflexion (80) qui est mis en place dans un perçage (81) de l'arbre de broche (16) et qui comporte à sa surface extérieure des renfoncements (90), lesquels forment, conjointement avec la surface intérieure du perçage (81) de l'arbre de broche (16), une chambre de déversement fermée (82) dans laquelle débouchent respectivement un canal d'approche et un canal de retour (83) associé.
